# EUROPEAN PATENT SPECIFICATION

(11) **EP 0 362 956 B1**
(45) Date of publication and mention of the grant of the patent: **25.08.1993**
(21) Application number: 89202487.8
(22) Date of filing: 02.10.1989
(51) Int. Cl.: A01C 15/00

(54) **Device for dissemination of a spreadable material**
Streuer für gekörnten Dünger
Appareil pour épandre des matériaux épandables

(30) Priority: 03.10.1988 NL 8802420
(43) Date of publication of application: 11.04.1990
(73) Proprietor: Multinorm B.V., NL-2153 LR Nieuw-Vennep (NL)
(72) Inventor: Vissers, Herbert Johannes, NL-2182 CP Hillegom (NL)
(74) Representative: Hoorweg, Petrus Nicolaas

(56) References cited:
- FR-A- 2 250 578
- NL-A- 7 310 755
- NL-C- 93 254

## Description

The invention relates to a device for the dissemination of spreadable material, such as fertilizer in powder or granule form, comprising a supported frame with storage holder for the material for spreading with an outlet opening disposed therein, a spreader pipe being driven for reciprocal substantially horizontal swinging and being in communication with said outlet opening, said spreader pipe having an outflow opening at the distal end thereof, whereas spread pattern influencing means are disposed at said distal end extending in the vertical central longitudinal plane of said spreader pipe, said spread pattern influencing means comprising a partition strip having top, bottom, front and end edges, whereas the partition strip protrudes freely downstream from the outflow opening of said spreader pipe over a determined length.

The problem which occurs in devices of the type described in the preamble, and for instance known from NL-C-93254, is the uniformity of the delivery behind the vehicle, on which or to which the device is attached in order to be able to disseminate the material over the field. The so-called spreading pattern on either side of the central longitudinal plane of the vehicle travelling forward over the field should be specular but in practice this is for many reasons not the case. It is therefore essential to know precisely what the deviations are in order to choose a determined travel pattern over the field, in order to achieve a delivery over the field that is the most uniform possible in its entirety. One way to achieve this is by allowing the spreading paths to overlap each other and further by accurately performing the usual adjustments, that is, the width of spread, the spreading speed, dosage etc. The type of material for dissemination, granule or powder, likewise determines the spreading pattern as much as the weather influences. An important indicator in determining the deviation of an obtained spreading pattern is the so-called VC (variation coefficient). This is a measurement of the uniformity of the dissemination. It is desireable to obtain a variation coefficient which is lower than 15.

The invention has for its object to improve the construction of the means influencing the spreading pattern such that the delivery onto the field is as even as possible.

The device according to the invention is distinguished in that the side surfaces of the partition-strip extend in lengthwise direction of said spreader pipe, the bottom edge of said partition strip being connected to the inner bottom wall of said spreader pipe and the front edge of said partition strip protruding upstream from said distal end of the spreader pipe over at least half the length of the partition strip.

It has been shown empirically in tests that this central partition makes a positive contribution to obtaining a mirror-symmetrical spreading pattern in relation to the central longitudinal plane.

It has also been found effective to arrange above the transverse partition an extra rebound surface which extends transversely of the lengthwise direction of the pipe behind the opening thereof.

In a preferred embodiment this rebound surface is arranged on a bridge-like part situated on a bracket running around the outflow opening at a large distance, which bracket is fixed to the standing outside wall portions of the pipe, whereby the partition ends at a distance from the bracket.

Above mentioned and other features will be elucidated in the figure description of an embodiment following hereinafter.

In the drawing:
Fig. 1 shows a schematic overview of an asymmetrical and a symmetrical spreading pattern, and a possible travel pattern over the field for spreading.
Fig. 2 shows an upright side view, partially in section, of an embodiment of the spreading device, with the spreader pipe and the improved means according to the invention for influencing the spreading pattern,
Fig. 3 shows a perspective top view of the outflow end of the spreader pipe with the unmounted means according to an embodiment for influencing the spreading pattern.
Fig. 4 shows a perspective view corresponding with fig. 3, in this case however with mounted means for influencing the spreading pattern,
Fig. 5 and 6 show respectively a side view and a standing lengthwise section of the spreader pipe end with the means for influencing the spreading pattern.

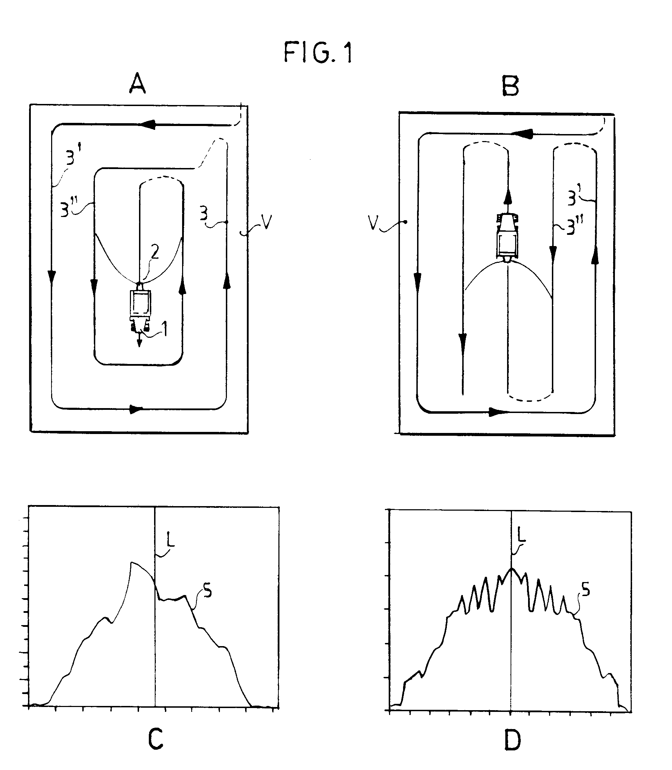

Fig. 1a and b show two different travel methods of an agricultural tractor 1 provided with a spreading device 2, which tractor can travel over the field V according to a path 3. In fig. 1a this is a path around the field, whereby movement is in the same direction on each round, see 3′, 3˝. In contrast fig. 1b shows a travel pattern to and fro in opposite directions, see the path 3′ and 3˝. The choice of whether to travel round or reciprocally over the field V is determined by the spreading pattern known to the user. This is shown in fig. 1c and 1d respectively, whereby the central longitudinal plane is indicated by L and whereby the spreading pattern is indicated by the line 5. In fig. 1c this is an asymmetrical spreading pattern. In fig. 1d it is a symmetrical or specular spreading pattern. It will be apparent that an asymmetrical spreading pattern is suitable for the travel method according to fig. 1 because each time the half with the high delivery goes together with the half with the low delivery, so that eventually a uniform spreading thickness is achieved over the field V. The spreading pattern according to fig. 1d is suitable for a reciprocal movement travel method.

This is expressed in the so-called variation coefficient VC which amounts to 10 for the travel method 1a with the spreading pattern 1c for travel round the field, and to 15 for reciprocal travel. For the accurate specular spreading pattern according to fig. 1d travel can be either reciprocal or round the field as no difference in the variation coefficient is achieved here.

The invention has for its object to approximate the spreading pattern according to fig. 1d.

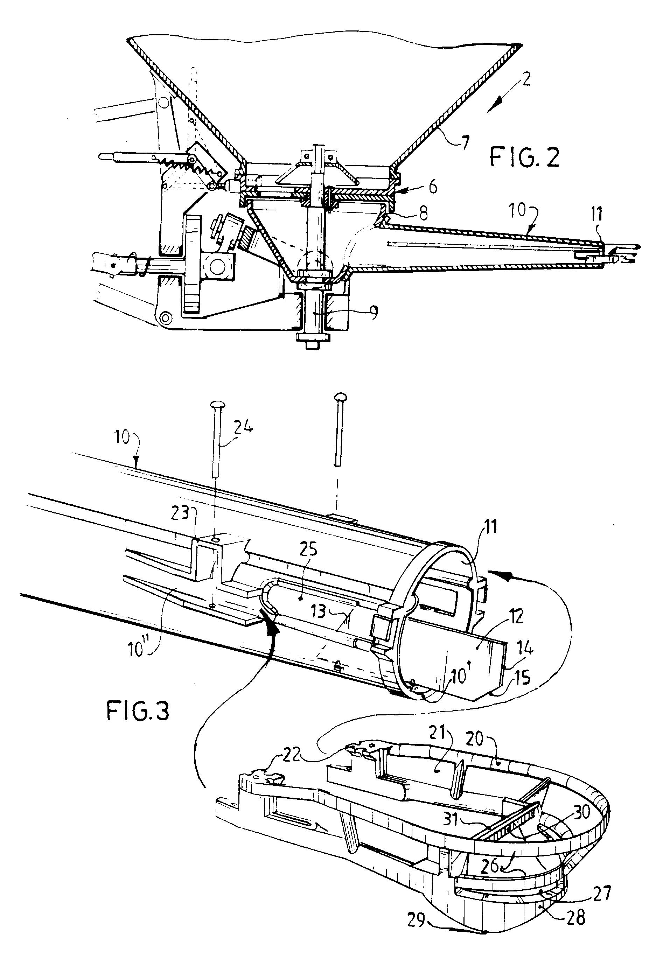

To this end the device according to fig. 2 is embodied with a spreader pipe 10, which is fixed on a container 8 reciprocally driven around a standing shaft 9 and of which the upper side connects onto a storage holder 7. Arranged between the storage holder 7 and the container 8 are dosage means 6. The method of driving the container 8 is assumed to be known and falls further outside the scope of the invention. The drive is such that the spreader pipe 10 is moved reciprocally about a shaft 9 in a horizontal plane over a determined pre-adjustable angle. As a result of the reciprocal movement 10 material is carried out of the storage holder 7 via the dosage means 6 into the container 8 and then via the spreader pipe 10 to the outflow end 11 thereof, after which the material is scattered freely over the field. In order to be able to alter the spreading pattern, means for determining the spreading pattern are arranged around or near to the outflow opening 11, which will be further elucidated hereafter.

In accordance with the invention one of the means for determining the spreading pattern is a partition 12 which connects to the bottom 10′ of the spreader pipe 10. The height of the partition 12 is at least equal to half the height of the vertical diameter of the outflow opening 11. The partition 12 is formed at the front with a front edge 13 sloping from the bottom 10′ to the outflow opening 11. The rear edge 14 of the partition 12 is set back at the bottom at 15 in the form of a chamfering but within the scope of the invention this can have any random form, for example stepped.

Arranged around the outflow opening 11 is a bracket 20 which is provided with passage openings 21. At the ends 22 the bracket is attached on each side to the standing side walls portions 10˝ of the spreader pipe 10, for which purpose are arranged receiving elements 23 moulded onto the spreader pipe 10. Each of the end portions 22 can be fastened by means of the pins 24 into the receiving means 23 such that an easy replacement is ensured. In the standing wall portions between the outflow end 11 and the receiving means 23 an opening 25 is arranged in the spreader pipe 10 to obtain an extra outflow opening for the material for spreading, this outflow opening 25 co-acting with the passage openings 21 in the bracket 20. It is noted that the upper edge of the bracket 20 displays a convex inner surface 26, which also applies to the lower edge thereof. In addition another extra passage opening 27 is formed at the lower edge 26, the function of which corresponds with that of the openings 21 in the top part of the bracket 20. It is noted that the portion 28 of the bracket 20 has a bottom edge 29, which is curved downward on either side of the central longitudinal plane of the spreader pipe that runs through the partition 12, so that the portion 28 broadens in vertical sense on either side of that longitudinal plane.

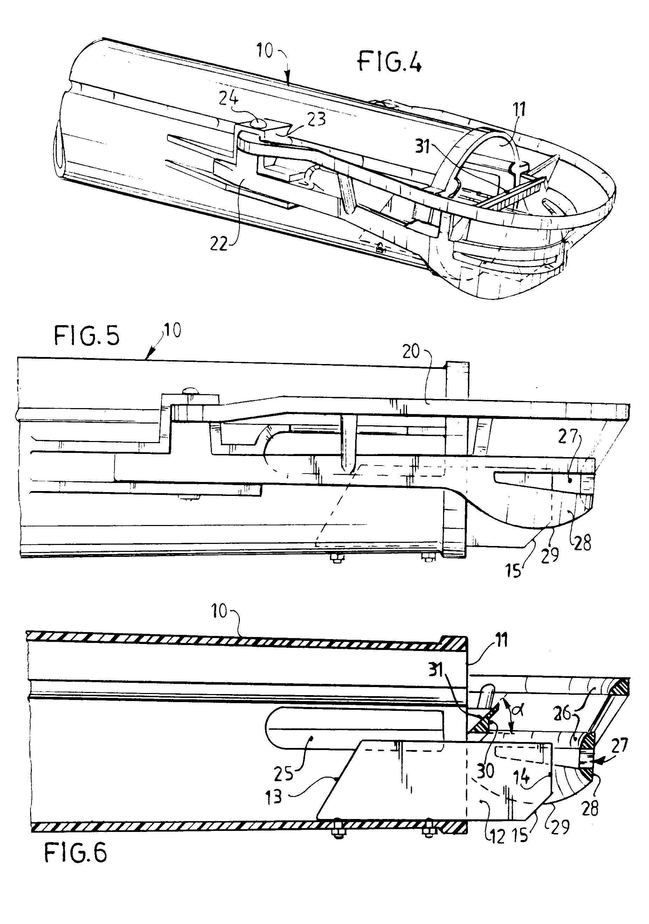

Finally, a bridge-like part 30 is arranged between the bracket edge strips which is provided with a rebound surface 31 that encloses an acute angle α with the longitudinal direction of the spreader pipe, see fig. 6. This bridge piece 30 extends above the partition 12 and transversely over the outflow opening 11.

The bridge piece 30 can lie free in relation to the partition 12 or be fixed thereto, in accordance with the desired construction. The rear edge 14 of the partition lies at a large distance from the lower edge of the bracket 20, see fig. 6.

The dissemination of the material thrown out by the pipe 10 will, as will be apparent from the above description, be influenced by the number of outflow openings of the spreader pipe 10, that is, 11, 25 and by the subsequent passage openings 21, 27 of the bracket 20 situated at an interval therefrom, whereby a portion touches the rebound surface 31 and whereby the distribution over the sides on either side of the central longitudinal plane is improved by the lengthwise partition 12 on the bottom of the spreader pipe 10.

## Claims

1. Device for the dissemination of spreadable material, such as fertilizer in powder or granule form, comprising a supported frame with storage holder (7) for the material for spreading with an outlet opening disposed therein, a spreader pipe (10) being driven for reciprocal substantially horizontal swinging and being in communication with said outlet opening, said spreader pipe (10) having an outflow opening at the distal end thereof, whereas spread pattern influencing means are disposed at said distal end extending in the vertical central longitudinal plane of said spreader pipe (10), said spread pattern influencing means comprising a partition strip (12) having top, bottom, front (13) and end edges (14), whereas the partition strip protrudes freely downstream from the outflow opening (11) of said spreader pipe over a determined length, **characterized in that** the side surfaces of the partition strip extend in lengthwise direction of said spreader pipe (10), the bottom edge of said partition strip being connected to the inner bottom wall of said spreader pipe and the front edge of said partition strip protruding upstream from said distal end of the spreader pipe over at least half the length of the partition strip.

2. Device as claimed in claim 1, **characterized in that** a rebound surface (31) is arranged behind the opening of the pipe (10) and extending transversely of and above the partition (12).

3. Device as claimed in claim 2, **characterized in that** a bracket (20) running at a distance around the outflow opening (11) of the spreader pipe (10) is fixed to the standing outer wall (10'') parts of said spreader pipe, whereby the partition (12) ends at a distance from the bracket.

4. Device as claimed in claim 3, **characterized in that** the rebound surface (31) is a part of a bridge piece (30) which extends between the bracket (20) behind the outflow opening of the spreader pipe (10).

5. Device as claimed in any of the foregoing claims, **characterized in that** the end edge (14) of the partition (12) is set back towards said bottom edge.

6. Device as claimed in any of the foregoing claims, **characterized in that** the front edge (13) of the partition (12) slopes diagonally from the bottom wall of the spreader pipe towards said outflow opening.

7. Device as claimed in any of the foregoing claims, **characterized in that** the lower edge of said bracket is a surface curving downwards at 29 on either side of said partition (12).

8. Device as claimed in any of the foregoing claims, **characterized in that** the height of the partition (12) is at most equal to half the height of the outflow opening (11) of the spreader pipe (10).

## Patentansprüche

1. Vorrichtung zum Ausbreiten eines streubaren Materials, wie beispielsweise Kunstdünger in Pulver- oder Granulatform, mit einem getragenen Rahmen mit Vorratshalter (7) für das zu streuende Material mit einer dort vorgesehenen Auslaßöffnung, mit einem Streurohr (10), das zum hin- und hergehenden, im wesentlichen horizontalen Schwingen angetrieben ist und das mit der genannten Auslaßöffnung in Verbindung steht, wobei das Streurohr (10) eine Ausflußöffnung an seinem distalen Ende aufweist, das Sprühmuster beeinflussende Mittel an dem distalen Ende vorgesehen sind, die sich in der vertikalen, zentralen Längsebene des Streurohrs (10) erstrecken, die das Streumuster beeinflussenden Mittel einen Trennwandstreifen (12) mit oberen, unteren, vorderen (13) und rückwärtigen Rändern (14) aufweisen, der Trennwandstreifen von der Ausflußöffnung (11) des Streurohres (10) aus über eine vorbestimmten Länge frei nach unten vorsteht, **dadurch gekennzeichnet,** daß sich die Seitenflächen des Trennwandstreifens in Längenrichtung des Streurohrs (10) erstrecken, wobei der untere Rand des Trennwandstreifens mit der inneren Bodenwand des Streurohrs in Verbindung steht und der vordere Rand des Trennwandstreifens von dem distalen Ende des Streurohrs über mindestens die halbe Länge des Trennwandstreifens nach oben vorsteht.

2. Vorrichtung nach Anspruch 1, **dadurch gekennzeichnet,** daß eine Prallfläche (31) hinter der Öffnung des Rohrs (10) angeordnet ist und sich quer zu der Trennwand (12) und über dieser erstreckt.

3. Vorrichtung nach Anspruch 2, **dadurch gekennzeichnet,** daß ein Bügel (20), der in einem Abstand rund um die Auslaßöffnung (11) des Streurohrs (10) verläuft, an den aufrechten äußeren Wandteilen (10'') des Streurohrs befestigt ist, wobei die Trennwand (12) in einem Abstand von dem Bügel endet.

4. Vorrichtung nach Anspruch 3, **dadurch gekennzeichnet,** daß die Prallfläche (31) Teil eines Brückenstücks (30) ist, das sich zwischen dem Bügel (20) hinter der Ausflußöffnung des Streurohrs (10) erstreckt.

5. Vorrichtung nach irgendeinem der vorhergehenden Ansprüche, **dadurch gekennzeichnet,** daß der hintere Rand (14) der Trennwand (12) in Richtung auf den Boden zurückgesetzt ist.

6. Vorrichtung nach irgendeinem der vorhergehenden Ansprüche, **dadurch gekennzeichnet,** daß der vordere Rand (13) der Trennwand (12) diagonal von der Bodenwand des Streurohres aus in Richtung auf die Ausflußöffnung geneigt ist.

7. Vorrichtung nach irgendeinem der vorhergehenden Ansprüche, **dadurch gekennzeichnet,** daß der untere Rand des Bügels eine Fläche ist, die bei 29 an jeder Seite der Trennwand (12) nach unten gewölbt ist.

8. Vorrichtung nach irgendeinem der vorhergehenden Ansprüche, **dadurch gekennzeichnet,** daß die Höhe der Trennwand (12) mindestens gleich der halben Höhe der Ausflußöffnung (11) des Streurohrs (10) ist.

## Revendications

1. Dispositif pour disséminer une matière épandable, tel que de l'engrais, sous forme de poudre ou de granules, comprenant un cadre supporté avec une trémie de stockage (7) prévue pour le matériau à épandre et pourvue d'une ouverture de sortie, un tube d'épandage (10) étant entraîné selon un mouvement d'oscillation en va-et-vient, sensiblement horizontal, et communiquant avec ladite ouverture de sortie, ledit tube d'épandage (10) comportant une ouverture de sortie au niveau de l'extrémité distale de ce dernier, tandis que des moyens de modification du schéma d'épandage sont placés au niveau de ladite extrémité distale, s'étendant dans le plan longitudinal central et vertical dudit tube d'épandage, lesdits moyens de modification du schéma d'épandage comprenant une bande formant cloison de séparation (12) comportant des bords supérieur, inférieur, avant (13) et arrière (14), tandis que la bande formant cloison de séparation s'avance librement en aval de l'ouverture de sortie (11) dudit tube d'épandage, sur une longueur déterminée, caractérisé en ce que les surfaces latérales de la bande formant cloison de séparation s'étendent dans le sens de la longueur, s'étendant dans le plan longitudinal central et vertical dudit tube d'épandage (10), le bord inférieur de ladite bande formant cloison de séparation étant raccordée à la paroi de fond intérieure duduit tube d'épandage et le bord avant de ladite bande formant cloison de séparation s'avançant en amont à partir de ladite extrémité distale du tube d'épandage, sur au moins la moitié de la longueur de la bande formant cloison de séparation.

2. Dispositif selon la revendication 1, caractérisé en ce qu'une surface de rebondissement (31) est prévue derrière l'ouverture du tube (10) et s'étend dans le sens transversal de la cloison de séparation (12) et au-dessus de cette dernière.

3. Dispositif selon la revendication 2, caractérisé en ce qu'un support (20) placé à une certaine distance autour de l'ouverture de sortie (11) du tube d'épandage (10) est fixé aux parties formant parois extérieures verticales (10'') dudit tube d'épandage, la cloison de séparation (12) se terminant à une certaine distance du support.

4. Dispositif selon la revendication 3, caractérisé en ce que la surface de rebondissement (31) fait partie d'une pièce formant pont (30) qui s'étend à l'intérieur du support (20) derrière l'ouverture de sortie du tube d'épandage (10).

5. Dispositif selon l'une quelconque des revendications précédentes, caractérisé en ce que le bord d'extrémité (14) de la cloison de séparation (12) est repoussée en direction dudit bord inférieur.

6. Dispositif selon l'une quelconque des revendications précédentes, caractérisé en ce que le bord avant (13) de la cloison de séparation (12) est incliné, dans le sens diagonal, à partir de la paroi du fond du tube d'épandage, en direction de ladite ouverture de sortie.

7. Dispositif selon l'une quelconque des revendications précédentes, caractérisé en ce que le bord inférieur dudit support est une surface s'incurvant vers le bas en (29), de chaque côté de ladite paroi de séparation (12).

8. Dispositif selon l'une quelconque des revendications précédentes, caractérisé en ce que la hauteur de la cloison de séparation (12) est au moins égale à la moitié de la hauteur de l'ouverture de sortie (11) du tube d'épandage (10).
